# EUROPEAN PATENT APPLICATION

(11) **EP 1 988 000 A1**
(43) Date of publication of application: **05.11.2008**
(21) Application number: 07008851.3
(22) Date of filing: 02.05.2007
(51) Int. Cl.: B62B 1/10, B66F 9/08

(54) **Portable lift hand truck**

(71) Applicant: Xianbin, Meng, Saint Petersburg FL 33742 (US)
(72) Inventor: Xianbin, Meng, Saint Petersburg FL 33742 (US)
(74) Representative: Kucinskas, Leonas Antanas

(57) **Abstract**

The present invention relates to a hand lift Hand Truck, especially a kind of lorry Hand Truck with an adjustable carrier, including a chassis, a carrier and a lifting device. The lifting device has a moveable pulley block on the carrier, a fixed pulley block on the chassis and a pull rope passing round the fixed pulley block and the moveable pulley block in turn and the end of the pull rope is wrapped at a winding axis, rotatable on the chassis, a locking device between the chassis and the winding axis is used to control the pivoting of the winding axis. When the said hand Portable Lift Hand Truck is working, the winding axis is rotating and the pull rope is wound around the winding axis, thus to drive the moveable pulley block and the fixed pulley block to bring the carrier moving up and down, the locking device can stop the carrier at any height for convenience. The utility model is able to lift the goods to a height for operator's easy handling without bending over again and again; at the same time, as there are several moveable pulleys, the handling is easier and more efficient.

## Description

### HELD OF THE INVENTION

The present utility model relates to a hand lift Hand Truck, especially a Portable Lift Hand Truck for lifting goods.

### BACKGROUND TECHNOLOGY

Based on the existing technology, the lightweight Portable Lift Hand Truck normally includes chassis, at least one pair of wheels rotatablely connected to the bottom of the said chassis, a handle on the upper end of the said chassis, a Hand Truck on the base of the said chassis for place goods. When using, the operators have to bend over to fetch or place goods, that may bring intensive labor and fatigue, even cause lumbar vertebrae diseases after long time working.

### SUMMARY OF THE INVENTION

The present utility model provides a Portable Lift Hand Truck for lifting goods and it can lift the goods from the ground to a comfortable height conveniently.

The technical proposal of the present utility model is: A hand Portable Lift Hand Truck comprising: a chassis, a carrier, the said carrier is able to move up and down on the said chassis with the help of a lifting device, at least a pair of wheels, which are rotatablely connected to the said chassis, a handle on the upper end of the chassis; the said lifting device has a moveable pulley block on the carrier, a fixed pulley block on the chassis and a pull rope passing round the fixed pulley block and the moveable pulley block in turn, the said fixed pulley block is above the said carrier and the end of the pull rope is wrapped at a winding axis, rotatable on the chassis, a locking device between the chassis and the winding axis is used to control the pivoting of the winding axis.

When the operators are handling, they can rotate the rocking handle to wrap the pull rope into the winding axis, and the moveable pulley block and the fixed pulley block will drive the carrier moving up and down along the guide way, the locking device can stop the carrier at any height for convenient handling.

As the above technical proposal is applied, the present utility model is able to lift the goods to a height for operator's easy handling without bending over again and again; at the same time, as there are several moveable pulleys, the handling is easier and more efficient

### BRIEF DESCRIPTION OF THE DRAWINGS

FIG. 1 is a schematic front elevation of embodiment 1 of a Portable Lift Hand Truck according to the present invention.
FIG. 2 is a left view of embodiment 1 of a Portable Lift Hand Truck according to the present invention.
FIG. 3 is a schematic elevation of service mode of embodiment 1 of a Portable Lift Hand Truck according to the present invention.
FIG. 4 is a schematic elevation showing the state of locking of the locking device of embodiment 1 of a Portable Lift Hand Truck according to the present invention.
FIG. 5 is a schematic elevation showing the state of unlocking of the locking device of embodiment 1 of a Portable Lift Hand Truck according to the present invention.

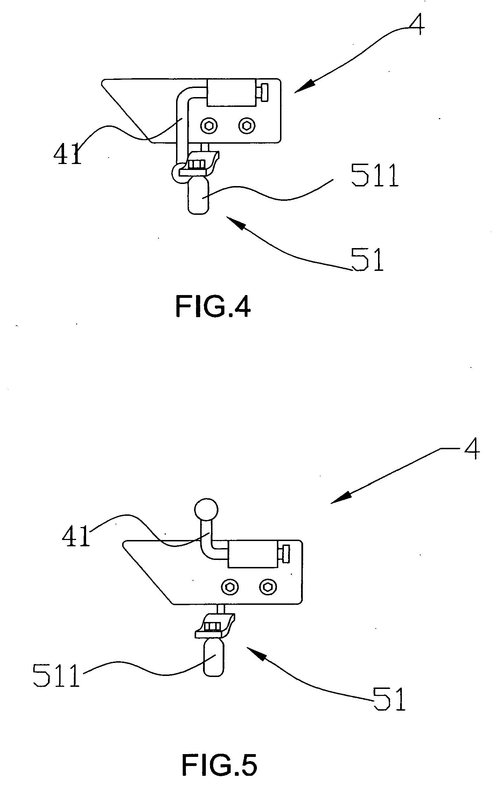

FIG. 5 is a schematic elevation showing the state of folded handle of embodiment 1 of a Portable Lift Hand Truck according to the present invention.

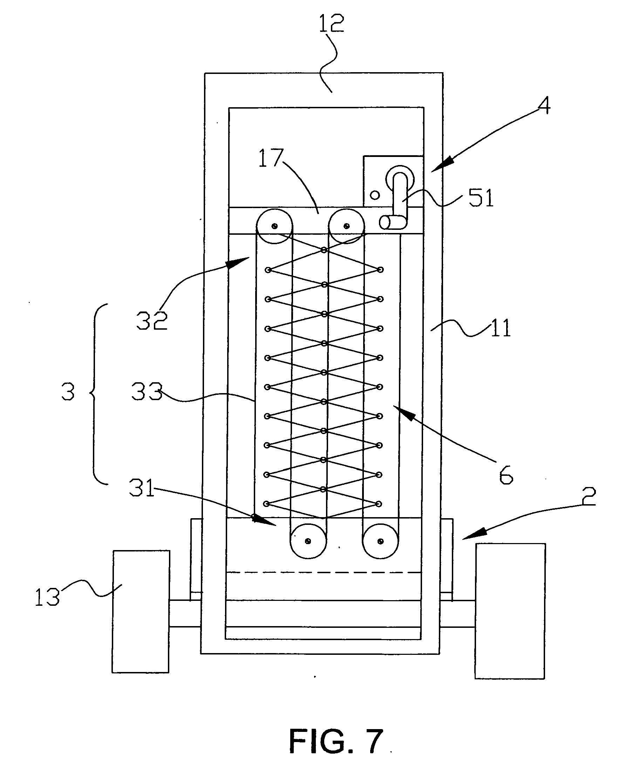

FIG. 7 is a back view of embodiment 2 of a Portable Lift Hand Truck according to the present invention (there is a retraction device on the chassis).

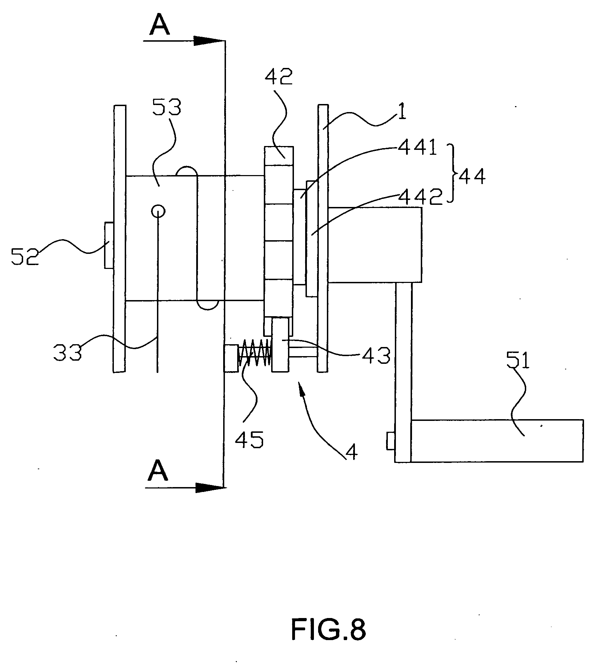

FIG. 8 is a right view of the locking device of embodiment 2 of a Portable Lift Hand Truck according to the present invention

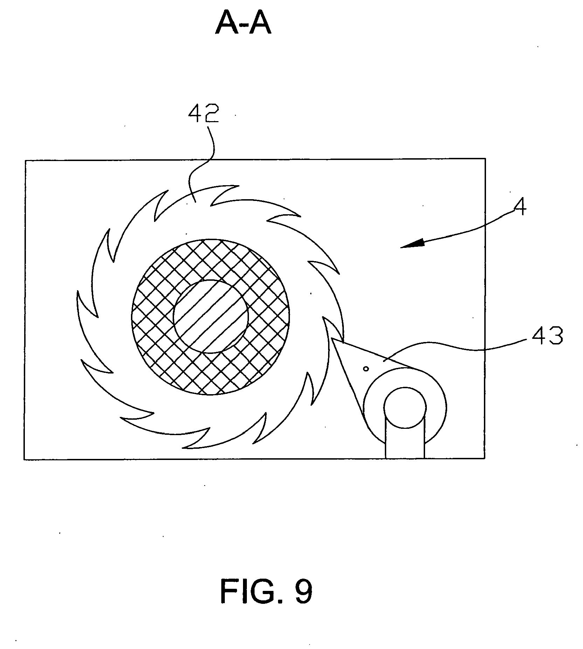

FIG. 9 is a schematic cross-sectional elevation taken along line A-A of FIG. 8

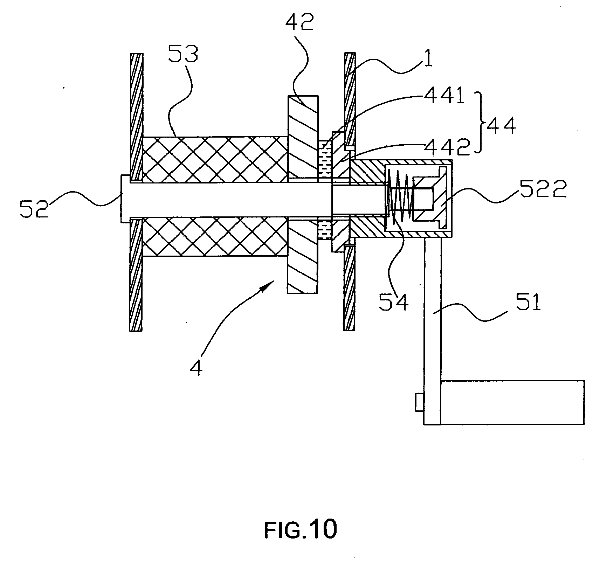

FIG. 10 is a schematic cross-sectional elevation of the locking device of embodiment 2 of a Portable Lift Hand Truck according to the present invention

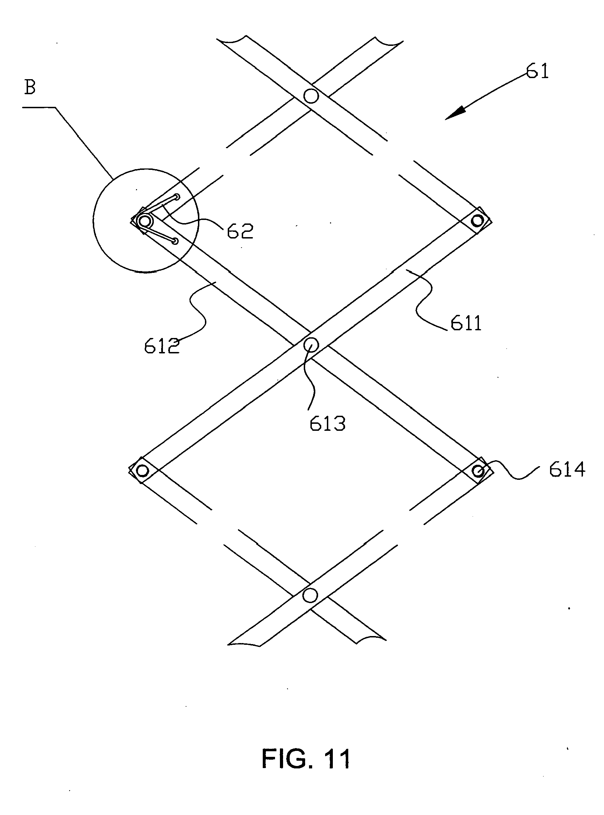

FIG. 11 is a schematic elevation of the retraction device of embodiment 2 of a Portable Lift Hand Truck according to the present invention (the elastic piece is located on the end axis)

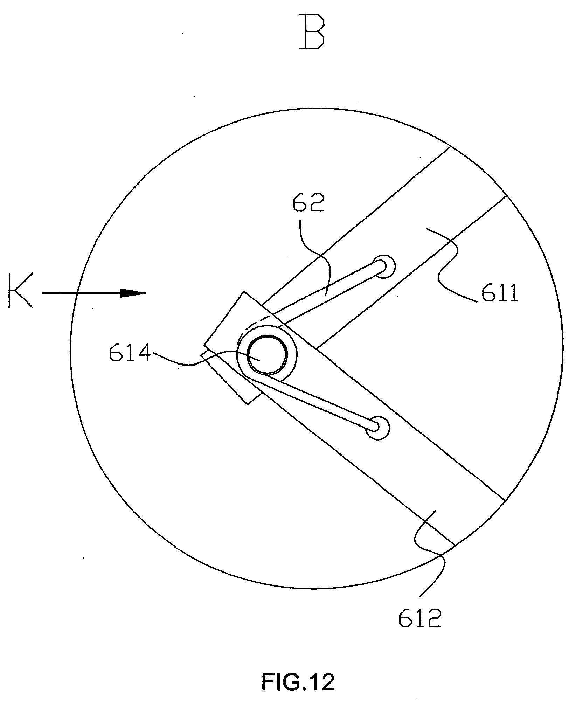

FIG. 12 is a close-up view of B in FIG.11

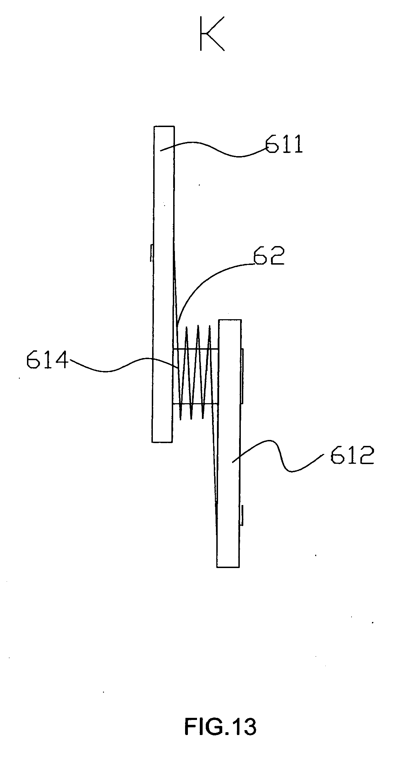

FIG. 13 is a K-direction view of FIG. 12

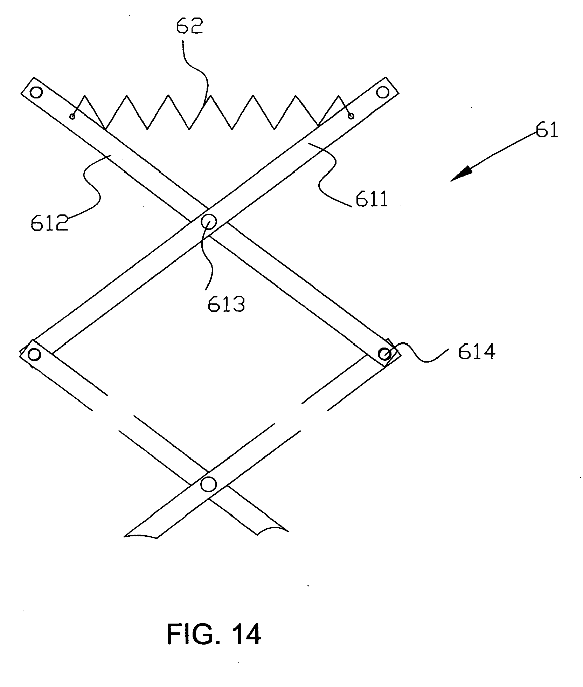

FIG. 14 is a schematic elevation of the retraction device of embodiment 2 of a Portable Lift Hand Truck according to the present invention (the elastic piece is located between the first connecting rod and the second connecting rod within one retraction unit)

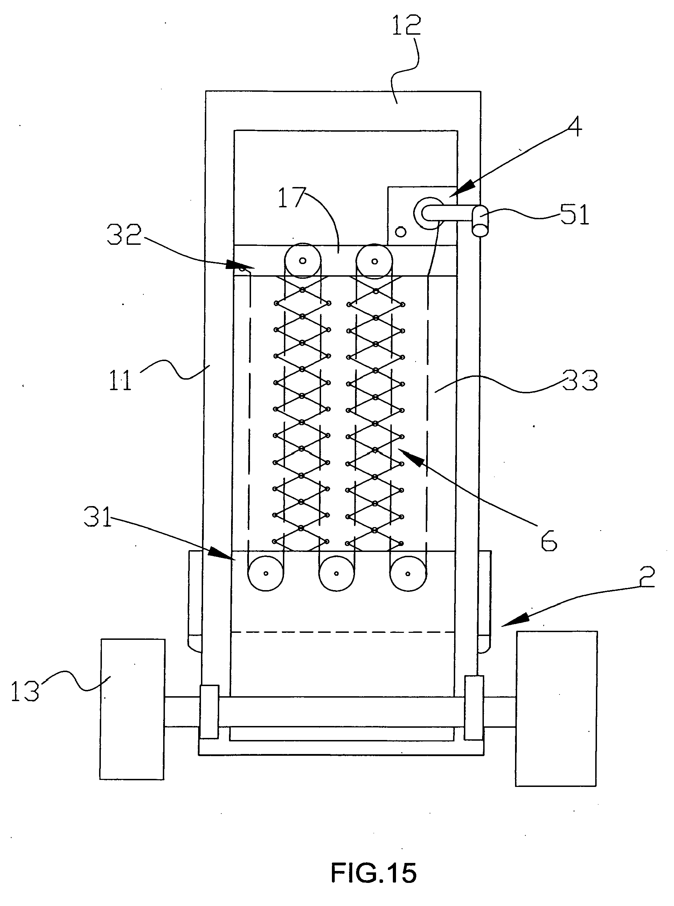

FIG. 15 is a back view of embodiment 2 of a Portable Lift Hand Truck according to the present invention (there is a retraction device on the chassis).

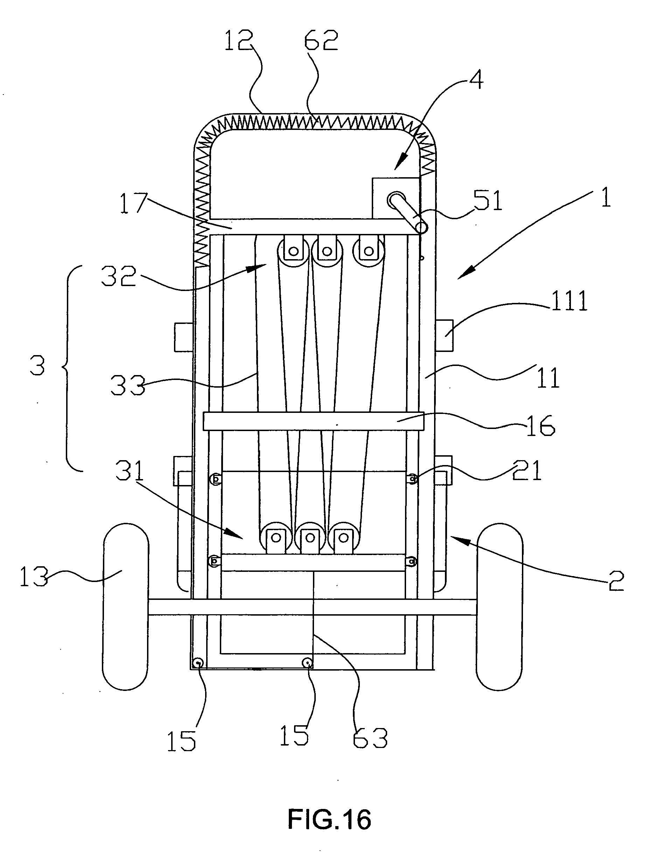

FIG. 16 is a back view of embodiment 3 of a Portable Lift Hand Truck according to the present invention.

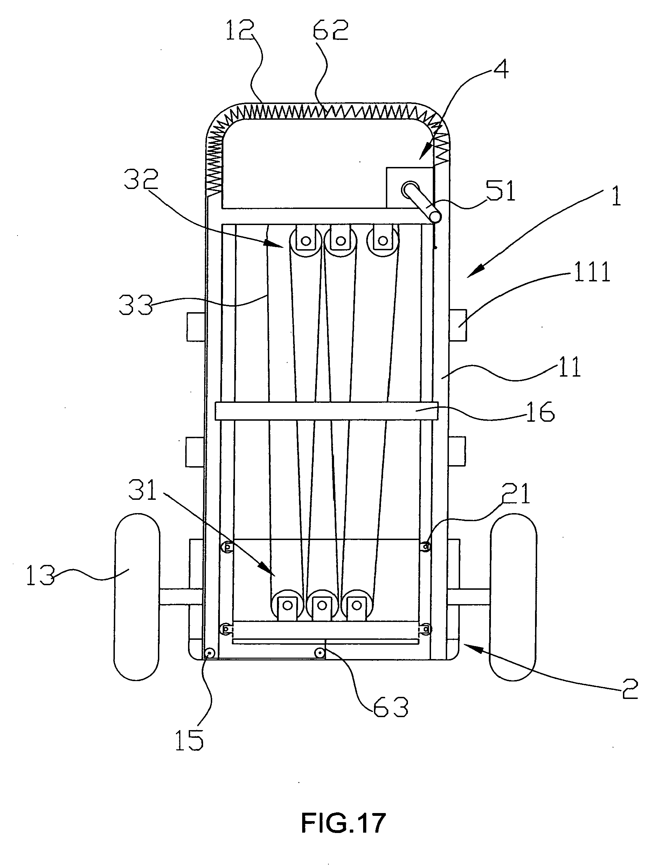

FIG. 17 is a schematic elevation of service mode of embodiment 3 of a Portable Lift Hand Truck according to the present invention (back view).

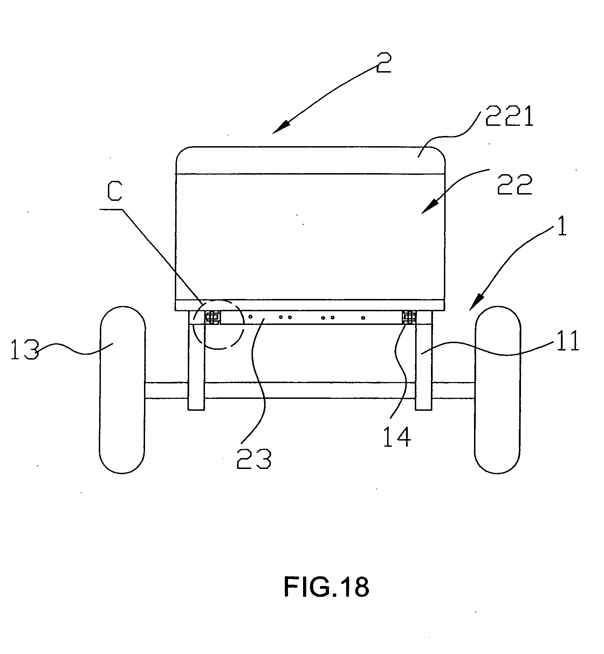

FIG. 18 is a top view of embodiment 3 of a Portable Lift Hand Truck according to the present invention.

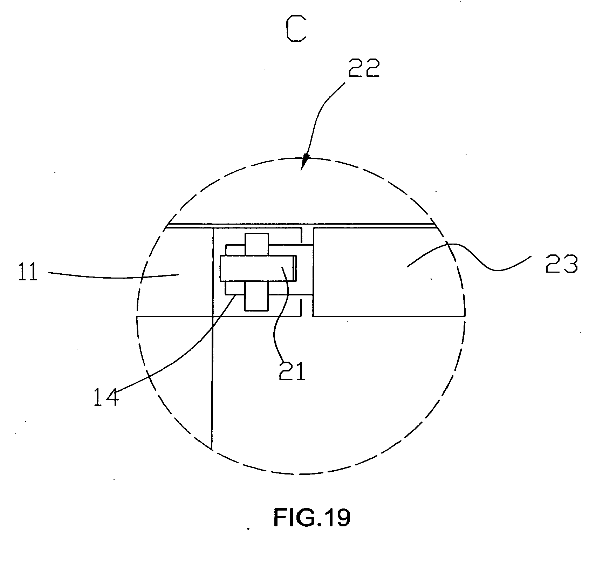

FIG. 19 is a close-up view of C in FIG.18

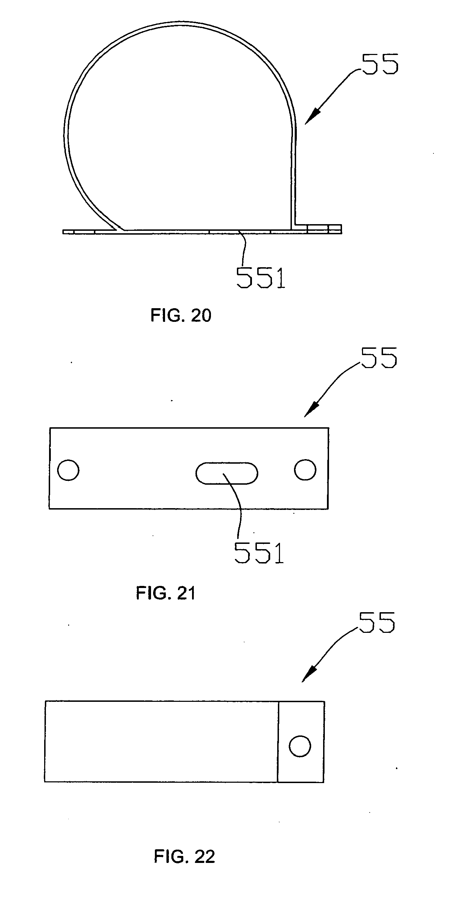

FIG. 20 is a schematic front elevation of the sleeve of embodiment 3 of a Portable Lift Hand Truck according to the present invention.
FIG. 21 is a bottom view of the sleeve of embodiment 3 of a . Portable Lift Hand Truck according to the present invention.
FIG. 22 is a top view of the sleeve of embodiment 3 of a Portable Lift Hand Truck according to the present invention.

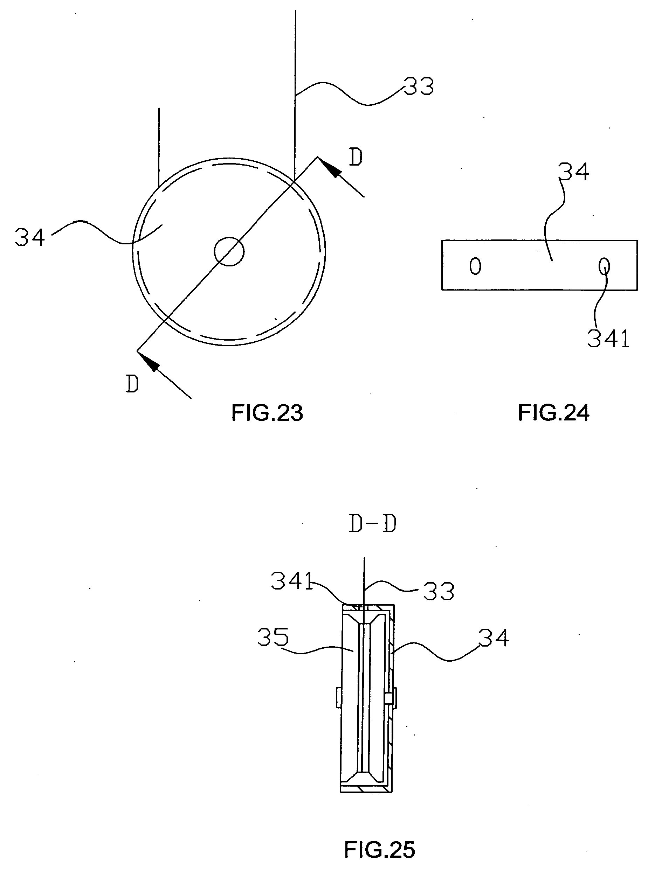

FIG. 23 is a schematic front elevation of the pulley housing of embodiment 3 of a Portable Lift Hand Truck according to the present invention.
FIG. 24 is a bottom view of the pulley housing of embodiment 3 of a Portable Lift Hand Truck according to the present invention.
FIG. 25 is a schematic cross-sectional elevation taken along line D-D of FIG. 23

Of which:
1. chassis; 11. longitudinal beam; 111. projecting lug; 12. handle; 13. wheel; 14. guide way; 15. lead block; 16. baffle; 17. cross beam;
2. carrier; 21. roller; 22. loading part; 221. slope; 23. fix part;
3. lifting device; 31. moveable pulley block; 32. fixed pulley block; 33. pull rope; 34. pulley housing; 341. the first fairlead; 35. pulley;
4. locking device; 41. stop lever; 42. ratchet; 43. claw; 44. friction wafer; 441. internal friction wafer; 442. external friction wafer; 45. reset torsion spring;
5. winding axis; 51. rocking handle; 511. hand grip; 52. central axis; 522.end cap; 53. winding roller; 54. elastic friction piece; 55. sleeve; 551. the second fairlead;
6. retraction device; 61. retraction unit; 611. the first connecting rod; 612. the second connecting rod; 613. intersecting axis; 614. end axis; 62. elastic piece; 63. towing line;

### DESCRIPTION OF PREFERRED EMBODIMENTS

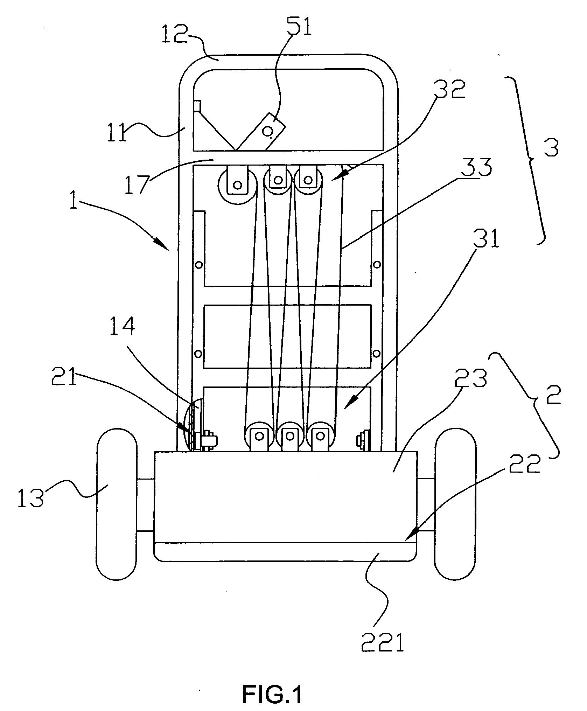

FIGS. 1 to 6 illustrate a first embodiment of a Portable Lift Hand Truck according to the present invention. The hand Portable Lift Hand Truck comprising: a chassis 1, at least a pair of wheels 13, which are rotatablely connected to the said chassis 1, a handle 12 on the upper end of the chassis 1 (refer the "upper" and "lower" positions to the FIG. 1), and the chassis 1 is made up of a pair of longitudinal beams 11 extending vertically and a cross beam 17 traversing a pair of longitudinal beams 11

On the opposite sides of a pair of longitudinal beams 11, there are guide ways 14 extending vertically, the carrier 2 is connected to the guide ways 14 and is moveable; on the two opposite sides of the carrier 2, there are rotatable rollers 21, the rollers 21 are located inside the guide way 14 and in rolling contact with the inner wall of the guide wall 14, the carrier 2 could move freely along the guide way 14 through a lifting device 3. in order to make the carrier 2 fully stressed and move smoothly, the two rollers 21 on the each side should be located on the upper and lower end of the carrier 2, the width of the opening of the guide way 14 is less than the width of the inside, these structures achieve a rolling friction contact between the carrier 2 and the guide way 14, so the carrier 2 could move up and down along the guide way 14 very smoothly and the rollers 21 will not escape from the guide way 14

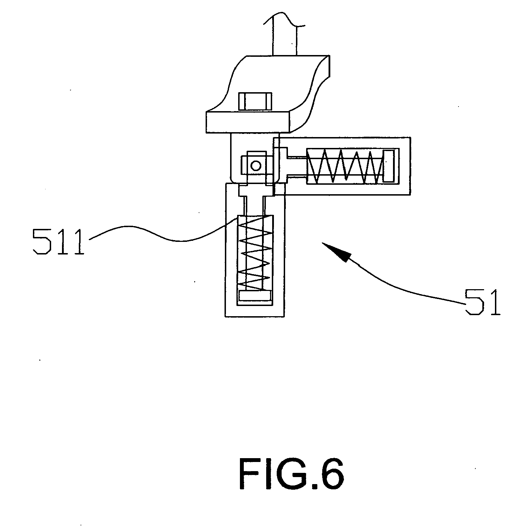

The lifting device 3 has a moveable pulley block 31 on the carrier 2, a fixed pulley block 32 on the chassis 1 and a pull rope 33 passing round the fixed pulley block 32 and the moveable pulley block 31 in turn, the fixed pulley block 32 is above the carrier 2, the starting end of the pull rope 33 is fixed at the cross beam 17 and the end of the pull rope 33 is wrapped at a winding axis 5, which is rotatable on the chassis 1, a locking device 4 between the chassis 1 and the winding axis 4 is used to control the pivoting of the winding axis 5. the rocking handle 51 is connected to the end of the winding axis 5, turning the rocking handle 51, the winding axis will be rotated as well to wind or release the pull rope 33, in order to save space, There is a folding hand grip 511 on the rocking handle 51, and at the same time, the hand grip 511 can elastically fixed to the rocking handle 51 with a spring, thus the hand grip 511 could keep two positions of using and folded stably, see FIG. 6.

In FIG. 4 and 5, the locking device 4 includes a rocking handle 51 and a stop lever 41 by the rocking handle 51, the stop lever 41 is rotatively connected to the chassis 1, when the locking device 4 is working, the stop lever 41 will stop the rocking handle 51; and when the locking device 4 is released, the stop lever 41 will leave the rocking handle 51.

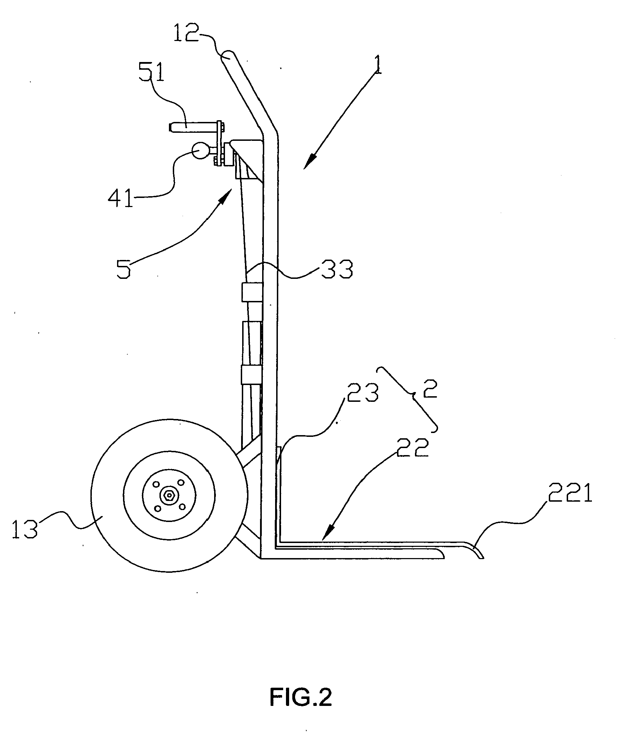

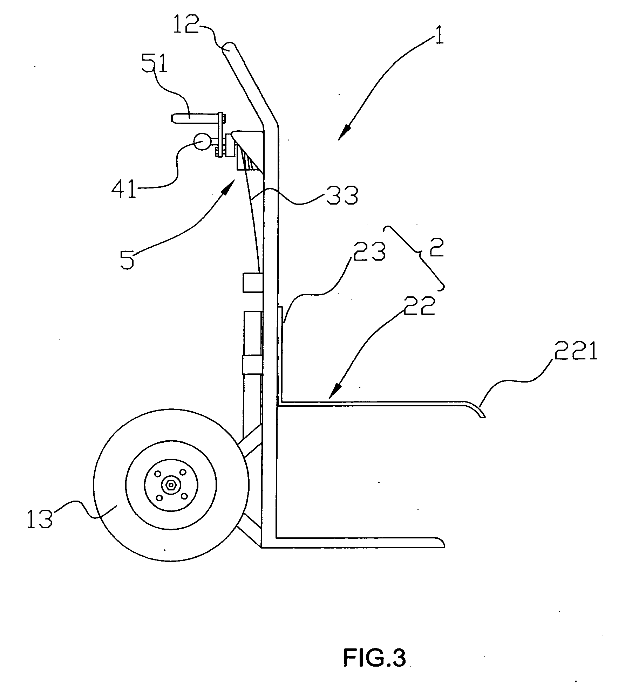

When working, the goods are placed on the carrier 2, then rotating the rocking handle 51 to drive the winding axis 5 to wind the pull rope 33, with the combined action of the fixed pulley block 32 and the moveable pulley block 31, the carrier 2 is lifted to a desired height, the said carrier 2 move upwards along the guide way 14 to the desired position, see FIG. 3 and 4; toggling the stop lever 41 to stop the rotation of the rocking handle 51 from the side, then the carrier 2 will be fixed to the chassis 1; when releasing the carrier 2, toggling the stop lever 41 to leave the rocking handle 51, rotating the rocking handle 51 reversely to release the pull rope 33, the carrier 2 will be retracted to the bottom as of the forces of gravity, see FIG. 2 and 5. As several moveable pulley blocks are applied, heavy goods can be lifted easier, thus to improve working efficiency.

The carrier 2 has a loading part 22 and a fix part 23, the moveable pulley block 31 is fixed to the fix part 23 and the loading part 22 extends to a horizontal plane and the end of the loading part 22 distal from the fix part 23 has a slope 221, thus the carrier can carry the goods more easily, and then the operator just needs to rotate the rocking handle 51 to lift the goods easily. The operators need not to bend over again and again, thus to reduce labor intensity and save human resources.

FIGS. 7 to 15 illustrate a second embodiment of a Portable Lift Hand Truck according to the present invention. The difference between these embodiments and the first one is that: there is a retraction device 6 between the chassis 1 and the carrier 2 to make the carrier 2 move down quickly, FIG. 7 shows a retraction device 6 on the chassis 1 and FIG. 15 shows a pair of retraction devices on the chassis 1 and several retraction devices 6 are available according to the demands.

The said retraction device 6 has several retraction units 61 connecting one after another, the said retraction unit 61 has intercrossed first connecting rod 611 and second connecting rod 612, the length of the first connecting rod 611 is the same as that of the second connecting rod 612 and the intersecting position is in the middle of the first connecting rod 611 and the second connecting rod 612.

The first connecting rod 611 and the second connecting rod 612 are hinge connected at the intercross; the upper end of the first connecting rod 611 of each retraction unit is hinge connected to the lower end of the second connecting rod 612 of the upside adjacent retraction unit, and the lower end of the first connecting rod 611 of each retraction unit is hinge connected to the upper end of the second connecting rod 612 of the downside adjacent retraction unit, and in at least one of the said several retraction units 61, there is an elastic piece 62 between the first connecting rod 611 and second connecting rod 612.

The elastic piece 62 has many options, for example, if use tension spring as the elastic piece 62 and it is located at the upper end of the first connecting rod 611 and the second connecting rod 612 within one retraction unit 61, see the FIG. 14, when the carrier 2 is lifted, the tension spring is forced to extend and when the carrier 2 is released, the torsion spring will come back quickly, the tension of spring make the first connecting rod 611 and the second connecting rod 612 move close to each other, as the several retraction units are linked, so the first connecting rod 611 and the second connecting rod 612 drive the entire retraction device 6 opening out, and then the carrier 2 is push off quickly; compressed spring is also available, it should be located between the lower ends of the first connecting rod 611 and the second connecting rod 612 within one retraction unit 61, when the carrier 2 is lifted, the elastic piece 62 is compressed and when the carrier 2 moving down, the elastic piece 62 will release elastic force to drive the carrier 2 move down quickly.

Of which, FIGS. 11 to 13 illustrate another preferred plan of a second embodiment of a Portable Lift Hand Truck according to the present invention. the first connecting rod 611 is hinge connected to the second connecting rod 612 at the intercross by the intersecting axis 613, and the first connecting rod 611 is hinge connected to the second connecting rod 612 at the end by the end axis 614, and the elastic piece 62 is torsion spring and is located on one end axis 614, normally, in order to achieve force balance, we will set torsion springs on a symmetrical pair of the end axis 614, thus to avoid deflection of the carrier 2. Sometimes, the elastic piece 62 can also be set on the intersecting axis 613, but in that case, the elastic force of the torsion spring shall be greater.

The advantage is that: as the Portable Lift Hand Truck applies the retraction device 6 with the linkage structure, one more driving force exerted on the carrier 2 when the carrier 2 is moving down, thus to prevent the carrier 2 from being blocked when moving as lacking of force of gravity, and the problem of slow lowering rate and unsmooth lowering of the carrier 2 is solved.

Besides, FIGS. 8 to 10 illustrate a locking device of another structure: the locking device 4 includes the ratchet 42 on the same winding axis 5 and the claw 43 on the chassis 1 to prevent the ratchet 42 from moving, the claw 43 engages with the ratchet 42.

The winding axis 5 includes a central axis 52 and a winding roller 53 fixed to the central axis 52, the diameter of the winding roller 53 is more than that of the central axis 52; there is a rocking handle 51 on the winding axis 5, there is a section of thread on the central axis 52 and there are screws on the rocking handle 51, the rocking handle 51 is connected to the central axis 52 by such thread and screws. At the end of the central axis 52 connected to the rocking handle 51, there is a fixed end cap 522, and there is an elastic friction piece 54 between the end cap 522 and the rocking handle 51; There is a friction wafer 44 between the ratchet 42 and the rocking handle 51; There is a reset torsion spring 45 between the claw 43 and the chassis 1 for the claw 43 to reset. The elastic friction piece 54 in the embodiment is the compressed spring.

The winding axis 5 and the locking device 4 can form two working states, and they are winding condition and winding-release condition; under the winding condition, the two sides of the friction piece 44 tightly contact with the ratchet 42 and the rocking handle 51 respectively, that means the winding roller 53 contacting with the ratchet 42 tightly and thus the ratchet 42 and the winding axis 5 are under rotary retaining and connected; when under the winding-release condition, the two sides of the friction piece 44 separate from the ratchet 42 and the rocking handle 51 respectively, and the ratchet 42 is rotatable and hitched around the winding axis 5.

Generally speaking, the ratchet 42 is made with metal, because the frictional coefficient between metals is small, we apply rubber or other non-metallic friction wafer 44 to contact against the ratchet 42. in the embodiment, the friction wafer 44 includes the internal friction wafer 441, the external friction wafer 442, the internal friction wafer 441 is made of non-metallic materials, while the external friction wafer,442 is made of wear resistant metallic materials with strong intensity.

When the winding axis 5 is winding, the rocking handle 51 continuously processes progressively under the effect of the screws and threads, the winding roller 53, the ratchet 42, the internal friction wafer 441, the external friction wafer 442 and the rocking handle 51 on the winding axis 5 are getting closer and closer, their frictional forces stop rotation, continue rotating the rocking handle 51 to drive the winding axis 5 to wind the pull rope 33 and then to lift the carrier 2; during the rotation of ratchet 42, the claw 43 gets over the effect of the reset torsion spring 45 to move from the bottom of teeth to the top of teeth of the ratchet 42, when the operator releasing the rocking handle 51 during winding, as the claw 43 engaging with the ratchet 42, and at the same time, the ratchet 42 still contacts tightly with the winding roller 53 on the winding axis 5, so under the effect of the frictional force between the ratchet 42 and the winding roller 53, the winding axis 5 will not automatically rotate back when drawn by the pull rope 33.

When the winding axis 5 is releasing winding, the rocking handle 51 screws out reversely, the winding roller 53, the ratchet 42, the internal friction wafer 441 and the external friction wafer 442 separate from each other, at this time, the ratchet 42 is rotatable and hitched around the winding axis 5, continue releasing the rocking handle 51, the rocking handle 51 will then stress the compressed spring, which contact with the rocking handle 51 and the end cap 522 tightly respectively, when the frictional force between the compressed spring and the rocking handle 51 and the end cap 522 is great enough, the rocking handle 51 will rotate with the winding axis 5 together, continue reverse rotation, the rocking handle 51 will drive the winding axis 5 to release winding.

As operating the ratchet 42 in a separative way, when the winding axis 5 is winding, the rocking handle 51 can drive the winding axis 5 to wind, and during the process, once the rocking handle 51 is released, the rocking handle 51 will not rotate back; and when the winding axis 5 is releasing winding, the rocking handle 51 can drive the winding axis 5 to release winding, thus to ensure an easy and safe operation.

When the winding axis 5 is winding, as the ratchet 42 on the winding axis 5 only allow single direction rotation, thus the ratchet 42 and the winding axis 5 are under rotary retaining and connected together; when releasing the rocking handle during winding, the winding axis 5 will self lock instead of automatically rotating back when drawn by the pull rope 33, thus to ensure the safety of the operators and prevent goods from falling as the locking device fails to lock in time.

FIGS. 16 to 25 illustrate a third embodiment of a Portable Lift Hand Truck according to the present invention: each pulley of the fixed pulley block 32 and the moveable pulley block 31 is covered by pulley housing 34, the inside diameter of each pulley housing 34 is a little more than the diameter of each roller 35 and each pulley housing 34 has two first fairleads 341 for the pull rope 33 to pass through. The pull rope 33 passes in from one first fairlead 341 and passes out from the other first fairlead 341 after passing by the pulley 35.

There is a sleeve 55 outside the winding axis 5, the sleeve 55 is fixed to the support of the winding axis 5, and there is a second fairlead 551 on the sleeve 55 for the pull rope 33 to pass through.

The advantage is that: the pull rope 33 will not escape from the pulley 35 or the winding axis 5 when the pull rope 33 around the fixed pulley block 32, the moveable pulley block 31 and the winding axis 5 is under lifting or loosened condition, thus to efficiently prevent the dangers arisen herefrom and troubles to reinstall pull rope 33.

Besides, FIGS. 16 to 19 illustrate another retraction device 6 in a third embodiment. The retraction device 6 includes the elastic piece 62 in the hollow tube on the chassis 1, the elastic piece 62 is the tension spring, one end of the elastic piece 62 is fixed to the chassis 1, and the other end of the elastic piece 62 has a towing line 63 connected to the carrier 2, there is lead block 15 on the bottom of the chassis 1, the towing line 63 passes round the lead block 15 and then be fixed to the bottom of the carrier 2.

There are plural projecting lugs 111 integrated on the pair of longitudinal beams 11 of the chassis 1, there is a baffle 16 integrated on the middle of the chassis 1, the baffle 16 spans the chassis 1 and the two ends of the baffle 16 are fixed to the two sides of the chassis 1 respectively.

When working, placing the goods on the carrier 2, and then rotating the winding handle 321 forwardly to drive the winding axis 5 to wind the pull rope 33, under the combined action of the fixed pulley block 32 and the moveable pulley block 31, the pull rope 33 gets over the effect of the elastic piece 62 connected to the towing line 63 to lift the carrier 2, the carrier 2 moves upwards along the guide way 14 to the desired position; when releasing the carrier, reversely rotating the winding handle 321 to release the pull rope 33, and the carrier 2 will be drawn by the towing line 63 and retracted to the initial position.

The advantage is that: the elastic piece 62 is in the hollow tube of the chassis 1 and the towing line 63 and lead block 15 are inside the hollow tube of the chassis 1, the space inside the hollow tube of the chassis 1 is fully used and such design is also able to drive the empty carrier 2 to the reset position, and the design is not only nice, but also practical.

Besides, the elastic piece 62 can use compressed spring, the end of the compressed spring is fixed to the chassis 1 and the other end of the compressed spring is fixed to the carrier 2; the compressed spring can also be set in the hollow tube of a pair of longitudinal beams 11 for a nice looking.

## Claims

1. A hand Portable Lift Hand Truck comprising: a chassis 1, a carrier 2, the said carrier is able to move up and down on the said chassis 1 with the help of a lifting device 3, at least a pair of wheels 13, which are rotatablely connected to the said chassis 1, a handle 12 on the upper end of the chassis 1; the said lifting device 3 has a moveable pulley block 31 on the carrier 2, a fixed pulley block 32 on the chassis 1 and a pull rope 33 passing round the fixed pulley block 32 and the moveable pulley block 31 in turn, the said fixed pulley block 32 is above the said carrier 2 and the end of the pull rope 33 is wrapped at a winding axis 5, rotatable on the chassis 1, a locking device 4 between the chassis 1 and the winding axis 5 is used to control the pivoting of the winding axis.

2. The Portable Lift Hand Truck according to claim 1, **characterized in that** on the each sides of the chassis 1, there is a guide way 14 extending along the length of the chassis 1, and there is at least a partial of the carrier 2 inserting into the guide way 14.

3. The Portable Lift Hand Truck according to claim 2, **characterized in that** on the two opposite sides of the carrier 2, there are rotatable rollers 21, the rollers 21 are located inside the guide way 14 and in rolling contact with the inner wall of the guide wall 14.

4. The Portable Lift Hand Truck according to claim 3, **characterized in that** each of the two opposite sides of the carrier 2 has two rollers 21, which are located at the upper end and lower end of the carrier 2.

5. The Portable Lift Hand Truck according to claim 2, **characterized in that** the width of the opening of the guide way 14 is less than the width of the inside.

6. The Portable Lift Hand Truck according to claim 1, **characterized in that** each pulley of the fixed pulley block 32 and the moveable pulley block 31 is covered by pulley housing 34, and each pulley housing 34 has two first fairlead 341 for the pull rope 33 to pass through.

7. The Portable Lift Hand Truck according to claim 6, **characterized in that** the inside diameter of each pulley housing 34 is a little more than the diameter of each roller 35.

8. The Portable Lift Hand Truck according to claim 1, **characterized in that** a retraction device 6 between the chassis 1 and the carrier 2 to drive the carrier 2 down quickly.

9. The Portable Lift Hand Truck according to claim 8, **characterized in that** the said retraction device 6 has several retraction units 61 connecting one after another, the said retraction unit 61 has intercrossed first connecting rod 611 and second connecting rod 612, which are hinge connected at the intercross; the upper end of the first connecting rod 611 of each retraction unit is hinge connected to the lower end of the second connecting rod 612 of the upside adjacent retraction unit, and the lower end of the first connecting rod 611 of each retraction unit is hinge connected to the upper end of the second connecting rod 612 of the downside adjacent retraction unit, and in at least one of the said several retraction units 61, there is an elastic piece 62 between the first connecting rod 611 and second connecting rod 612.

10. The Portable Lift Hand Truck according to claim 9, **characterized in that** the elastic piece 62 is between the first connecting rod 611 and second connecting rod 612 in one retraction unit 61.

11. The Portable Lift Hand Truck according to claim 10, **characterized in that** the said elastic piece 62 is tension spring.

12. The Portable Lift Hand Truck according to claim 9, **characterized in that** the first connecting rod 611 is hinge connected to the second connecting rod 612 at the intercross by the intersecting axis 613, and the first connecting rod 611 is hinge connected to the second connecting rod 612 at the end by the end axis 614, and the elastic piece 62 is located on one axis at least of the several end axis 614 and the intersecting axis 613.

13. The Portable Lift Hand Truck according to claim 12, **characterized in that** the elastic piece 62 is located on one axis at least of the several end axes 614.

14. The Portable Lift Hand Truck according to claim 13, **characterized in that** the elastic piece 62 is torsion spring.

15. The Portable Lift Hand Truck according to claim 9, **characterized in that** the length of the first connecting rod 611 is the same as that of the second connecting rod 612 and the intersecting axis 613 is in the middle of the first connecting rod 611 and the second connecting rod 612.

16. The Portable Lift Hand Truck according to claim 8, **characterized in that** the retraction unit 6 includes the elastic piece 62 on the chassis 1, the end of the elastic piece 62 is fixed to the chassis 1 and the other end of the elastic piece 62 is connected to the carrier 2.

17. The Portable Lift Hand Truck according to claim 16, **characterized in that** the elastic piece 62 is compressed spring.

18. The Portable Lift Hand Truck according to claim 16, **characterized in that** the elastic piece 62 is tension spring.

19. The Portable Lift Hand Truck according to claim 18, **characterized in that** at the end of the elastic piece 62 that is connected to the carrier 2, there is a towing line 63, and there is lead block 15 on the bottom of the chassis 1, the towing line 63 passes round the lead block 15 and then be fixed to the bottom of the carrier 2.

20. The Portable Lift Hand Truck according to claim 19, **characterized in that** the elastic piece 62 is inside the hollow tube of the chassis 1.

21. The Portable Lift Hand Truck according to claim 19, **characterized in that** there is a baffle 16 in the middle part of the chassis 1, and the said baffle 16 crosses the chassis 1, and the two ends of the baffle 16 is fixed to the two sides of the chassis 1.

22. The Portable Lift Hand Truck according to claim 1, **characterized in that** there is a rocking handle 51 fixed to the winding axis 5, the locking device 4 includes a stop lever 41 by the rocking handle 51, the stop lever 41 is rotatively connected to the chassis 1, when the locking device 4 is working, the stop lever 41 will stop the rocking handle 51; and when the locking device 4 is released, the stop lever 41 will leave the rocking handle 51.

23. The Portable Lift Hand Truck according to claim 1, **characterized in that** the locking device 4 includes the ratchet 42 on the same winding axis 5 and the claw 43 on the chassis 1 to prevent the ratchet 42 from moving, the claw 43 engages with the ratchet 42, and the winding axis 5 and the locking device 4 have two working state, that are winding condition and winding-release condition, under the winding condition, the ratchet 42 and the winding axis 5 are under rotation retaining and connection and under the winding-release condition, the ratchet 42 is rotatable and hitched around the winding axis 5.

24. The Portable Lift Hand Truck according to claim 23, **characterized in that** the winding axis 5 has a rocking handle 51, there is a friction wafer 44 between the ratchet 42 and the rocking handle 51; when the winding axis 5 is under the winding condition, the two sides of the friction wafer 44 tightly contact with the ratchet 42 and the rocking handle 51 respectively and when the winding axis 5 is under the winding-release condition, the two sides of the friction wafer 44 separate from the ratchet 42 and the rocking handle 51.

25. The Portable Lift Hand Truck according to claim 24, **characterized in that** the winding axis 5 includes a central axis 52 and a winding roller 53 fixed to the central axis 52, the diameter of the winding roller 53 is more than that of the central axis 52; when the winding axis 5 is under the winding condition, the winding roller 53 tightly contacts the ratchet 42 and when the winding axis 5 is under the winding-release condition, the winding roller 53 separates from the ratchet 42.

26. The Portable Lift Hand Truck according to claim 25, **characterized in that** there should be at least a section of thread on the central axis 52 and there are screws on the rocking handle 51, the rocking handle 51 is connected to the central axis 52 by such thread and screws.

27. The Portable Lift Hand Truck according to claim 23 or 26, **characterized in that** at the end of the central axis 52 connected to the rocking handle 51, there is a fixed end cap 522, and there is a elastic friction piece 54 between the end cap 522 and the rocking handle 51.

28. The Portable Lift Hand Truck according to claim 23, **characterized in that** there is a reset torsion spring 45 between the claw 43 and the chassis 1 for the claw 43 to reset.

29. The Portable Lift Hand Truck according to claim 1, **characterized in that** there is a sleeve 55 outside the winding axis 5, the sleeve 55 is fixed to the support of the winding axis 5, there is a second fairlead 551 on the sleeve 55 for the pull rope 33 to pass through.

30. The lightweight Portable Lift Hand Truck according to claim 1, **characterized in that** the carrier 2 has a loading part 22 and a fix part 23, the moveable pulley block 31 is fixed to the fix part 23 and the loading part 22 extends to a horizontal plane and the end of the loading part 22 distal from the fix part 23 has a slope 221.
